(19) Europäisches Patentamt
European Patent Office
Office européen des brevets

(11) **EP 3 419 260 A1**

(12) **EUROPEAN PATENT APPLICATION**
published in accordance with Art. 153(4) EPC

(43) Date of publication:
**26.12.2018 Bulletin 2018/52**

(51) Int Cl.:
**H04M 1/725** (2006.01)　　　**G06F 3/033** (2013.01)

(21) Application number: **16893850.4**

(22) Date of filing: **14.03.2016**

(86) International application number:
**PCT/CN2016/076307**

(87) International publication number:
**WO 2017/156685 (21.09.2017 Gazette 2017/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.**
**Longgang District**
**Shenzhen, Guangdong 518129 (CN)**

(72) Inventors:
• **GUO, Zejin**
**Shenzhen**
**Guangdong 518129 (CN)**

• **HE, Feng**
**Shenzhen**
**Guangdong 518129 (CN)**
• **ZHU, Haitao**
**Shenzhen**
**Guangdong 518129 (CN)**
• **LIAN, Hai**
**Shenzhen**
**Guangdong 518129 (CN)**

(74) Representative: **Maiwald Patent- und**
**Rechtsanwaltsgesellschaft mbH**
**Elisenhof**
**Elisenstraße 3**
**80335 München (DE)**

(54) **INFORMATION INPUT METHOD FOR TERMINAL, AND TERMINAL**

(57) Embodiments of the present invention relate to the field of terminal technologies, and provide an information entering method for a terminal and a terminal, to improve security of entering information on a terminal. The method includes: displaying, by a display interface of the terminal, an information entering box; collecting, by the terminal, a first fingerprint using the fingerprint sensor; after the terminal determines that the first fingerprint matches a preset fingerprint, obtaining, by the terminal, motion data of the terminal collected by the motion sensor in a first time period; obtaining, by the terminal, information corresponding to the first fingerprint and the motion data, or obtaining information corresponding to the motion data; and entering, by the terminal, the obtained information into the information entering box. The method is applied to a scenario of entering information on a terminal.

| | |
|---|---|
| A display interface of a terminal displays an information entering box | S101 |
| The terminal collects a first fingerprint by using a fingerprint sensor | S102 |
| After the terminal determines that the first fingerprint matches a preset fingerprint, the terminal obtains motion data of the terminal collected by a motion sensor in a first time period | S103 |
| The terminal obtains information corresponding to the first fingerprint and the motion data, or obtains information corresponding to the motion data | S104 |
| The terminal enters the obtained information into the information entering box | S105 |

FIG. 1

EP 3 419 260 A1

## Description

### TECHNICAL FIELD

Embodiments of the present invention relate to the field of terminal technologies, and in particular, to an information entering method for a terminal and a terminal.

### BACKGROUND

With a rise of the Internet finance, entering a password on a terminal is common. More important passwords need to be frequently entered, for example, an online banking password and a payment password. Therefore, security and conveniences of entering a password become more important. At present, a user enters a password by directly using a keyboard on the terminal, but the password is easily peeped by other people in an entering process, and it causes relatively low security when the password is entered.

### SUMMARY

Embodiments of the present invention provide an information entering method for a terminal and a terminal, and can improve security of entering information on a terminal.

According to a first aspect, an embodiment of the present invention provides an information entering method for a terminal, and the terminal includes a fingerprint sensor and a motion sensor, and the method includes:

displaying, by a display interface of the terminal, an information entering box;
collecting, by the terminal, a first fingerprint using the fingerprint sensor;
after the terminal determines that the first fingerprint matches a preset fingerprint, obtaining, by the terminal, motion data of the terminal collected by the motion sensor in a first time period, where the first time period may be less than or equal to a time period from a moment at which the fingerprint sensor collects the first fingerprint to a moment at which the first fingerprint leaves the fingerprint sensor;
obtaining, by the terminal, information corresponding to the first fingerprint and the motion data, or obtaining information corresponding to the motion data; and
entering, by the terminal, the obtained information into the information entering box.

According to the information entering method for a terminal provided in this embodiment of the present invention, the first fingerprint is collected, after the first fingerprint matches the preset fingerprint, the motion data of the terminal in the first time period is collected, to obtain the information corresponding to the first fingerprint and the motion data or the information corresponding to the motion data, and further the information is entered into the information entering box, so that the user enters the information without using a keyboard, and security of entering the information on the terminal is ensured.

For example, in this embodiment of the present invention, the first time period may be any one of the following.

(1) The first time period is a time period from a moment at which the fingerprint sensor starts to collect the first fingerprint to a moment at which the terminal detects that the first fingerprint leaves the fingerprint sensor.
(2) The first time period is a time period from a moment at which the terminal determines that the first fingerprint matches the preset fingerprint to a moment at which the terminal detects that the first fingerprint leaves the fingerprint sensor.
(3) The first time period is a time period from a moment at which the fingerprint sensor starts to collect the first fingerprint to a moment at which the terminal stops moving.
(4) The first time period is a time period from a moment at which the terminal determines that the first fingerprint matches the preset fingerprint to a moment at which the terminal stops moving.
In the foregoing four optional manners, in a manner of determining a start moment of the first time period by detecting a fingerprint, the first time period can be more accurate, thereby improving accuracy of the motion data of the terminal that is obtained by the terminal in the first time period.
(5) The first time period is a time period from a moment at which the terminal starts to move to a moment at which the terminal stops moving, after the fingerprint sensor starts to collect the first fingerprint.
(6) The first time period is a time period from a moment at which the terminal starts to move to a moment at which the terminal stops moving, after the terminal determines that the first fingerprint matches the preset fingerprint.

The fingerprint sensor continuously detects the first fingerprint in the first time period.

Optionally, the display interface of the terminal displays only one information entering box, and in this case, the obtained information is entered into the information entering box.

Optionally, the display interface of the terminal displays only one information entering box, and the terminal is in a state in which information is to be entered. That is, the display interface of the terminal displays only one information entering box, and a cursor is located in the information entering box, that is, the information entering box is in a state in which the information is to be entered. In this case, the obtained information may be entered into the information entering box.

Optionally, the display interface of the terminal displays multiple information entering boxes, for example, a first information entering box and a second information entering box. The terminal is in a state in which the information is to be entered into the first information entering box, that is, a cursor is located in the first information entering box, and the first information entering box is in a state in which the information is to be entered. In this case, the terminal enters the obtained information into the first information entering box.

Optionally, the obtaining, by the terminal, information corresponding to the first fingerprint and the motion data, or obtaining information corresponding to the motion data includes:

calculating, by the terminal, a first motion feature vector according to the motion data; and
after the terminal determines that the first motion feature vector matches a preset motion feature vector, obtaining, by the terminal according to a preset data correspondence, the information corresponding to the first fingerprint and the motion data, or obtaining the information corresponding to the motion data.

Optionally, the information entering box is a password entering box.

In this embodiment of the present invention, the information entering box may be the password entering box on the terminal and accommodate various scenarios on the terminal in which a password needs to be entered, so that security of entering a password is improved.

Optionally, the motion sensor includes at least one or more of the following: an acceleration sensor, a gyroscope, a magnetometer, or a gravity sensor.

Optionally, the motion data includes any one or more of the following: a speed, an acceleration, an angular velocity, or an angular acceleration of the terminal.

Optionally, the entering, by the terminal, the obtained information into the information entering box includes:

entering, by the terminal, the obtained information into the information entering box in a ciphertext manner; or
entering, by the terminal, the obtained information into the information entering box in a plaintext manner.

The information entering method provided in this embodiment of the present invention does not limit the information entering box, and can accommodate any property of the information entering box, to display the obtained information.

According to a second aspect, an embodiment of the present invention provides a terminal, including:

a display;
a fingerprint sensor, configured to collect a fingerprint;
a motion sensor, configured to collect motion data of the terminal; and
a processor, configured to: display an information entering box on the display; after the fingerprint sensor collects a first fingerprint and determines that the first fingerprint matches a preset fingerprint, obtain motion data of the terminal collected by the motion sensor in a first time period; obtain information corresponding to the first fingerprint and the motion data, or obtain information corresponding to the motion data; and enter the obtained information into the information entering box displayed on the display.

For example, the terminal may determine any one of the following as the first time period.

(1) The first time period is a time period from a moment at which the fingerprint sensor starts to collect the first fingerprint to a moment at which the terminal detects that the first fingerprint leaves the fingerprint sensor.
(2) The first time period is a time period from a moment at which the terminal determines that the first fingerprint matches the preset fingerprint to a moment at which the terminal detects that the first fingerprint leaves the fingerprint sensor.
(3) The first time period is a time period from a moment at which the fingerprint sensor starts to collect the first fingerprint to a moment at which the terminal stops moving.
(4) The first time period is a time period from a moment at which the terminal determines that the first fingerprint matches the preset fingerprint to a moment at which the terminal stops moving.

(5) The first time period is a time period from a moment at which the terminal starts to move to a moment at which the terminal stops moving, after the fingerprint sensor starts to collect the first fingerprint.

(6) The first time period is a time period from a moment at which the terminal starts to move to a moment at which the terminal stops moving, after the terminal determines that the first fingerprint matches the preset fingerprint.

The fingerprint sensor continuously detects the first fingerprint in the first time period.

Optionally, the display interface of the terminal displays only one information entering box, and in this case, the processor may enter the obtained information into the information entering box.

Optionally, the display interface of the terminal displays only one information entering box, and the terminal is in a state in which information is to be entered. That is, the display interface of the terminal displays only one information entering box, and a cursor is located in the information entering box, that is, the information entering box is in a state in which the information is to be entered. In this case, the processor may enter the obtained information into the information entering box.

Optionally, the display interface of the terminal displays multiple information entering boxes, for example, a first information entering box and a second information entering box. The terminal is in a state in which the information is to be entered into the first information entering box, that is, a cursor is located in the first information entering box, and the first information entering box is in a state in which the information is to be entered. In this case, the processor enters the obtained information into the first information entering box.

Optionally, when obtaining the information corresponding to the first fingerprint and the motion data, or obtaining the information corresponding to the motion data, the processor is specifically configured to:

calculate a first motion feature vector according to the motion data; and
after determining that the first motion feature vector matches a preset motion feature vector, obtain, according to a preset data correspondence, the information corresponding to the first fingerprint and the motion data, or obtain the information corresponding to the motion data.

Optionally, the information entering box displayed on the display is a password entering box.

Optionally, the motion sensor includes at least one or more of the following: an acceleration sensor, a gyroscope, a magnetometer, or a gravity sensor.

Optionally, the motion data collected by the motion sensor includes any one or more of the following: a speed, an acceleration, an angular velocity, or an angular acceleration of the terminal.

Optionally, the processor is specifically configured to enter the obtained information into the information entering box in a ciphertext manner; or

the processor is specifically configured to enter the obtained information into the information entering box in a plaintext manner.

For technical effects of the terminal provided in the embodiments of the present invention, refer to technical effects of the information entering method in the first aspect and each optional manner in the first aspect, and details are not described herein.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention.

FIG. 1 is a method flowchart of an information entering method for a terminal according to an embodiment of the present invention;

FIG. 2 is a schematic diagram of a password entering box displayed on a display interface of a terminal according to an embodiment of the present invention;

FIG. 3 is a schematic diagram of collecting a first fingerprint by a fingerprint sensor of a terminal according to an embodiment of the present invention;

FIG. 4 is a schematic diagram of shaking a terminal by a user on a preset track according to an embodiment of the present invention;

FIG. 5a and FIG. 5b are schematic diagrams of entering a password into a password entering box by a terminal according to an embodiment of the present invention; and

FIG. 6 is a schematic diagram of a hardware structure of a terminal according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention.

An information entering method for a terminal provided in the embodiments of the present invention may be applied to various scenarios in which information needs to be entered on the terminal, including various scenarios in which a password and other information need to be entered. According to the information entering method provided in the embodiments of the present invention, after a finger of a user touches a fingerprint sensor of the terminal, and the terminal is shaken on a preset track, the terminal obtains motion data of the terminal that is generated when the user shakes the terminal on the track, so that the terminal identifies, according to a pre-stored data correspondence, information (such as a preset password) corresponding to the motion data of the terminal, and enters the identified information into an information entering box. Because the user enters related information without using a keyboard on the terminal, security of entering information can be ensured.

It should be noted that the terms "first", "second", and "third" in the embodiments of the present invention are merely intended for a purpose of description and used to distinguish different objects described, and shall not be understood as an indication or implication of relative importance or implicit indication of the number of indicated technical features.

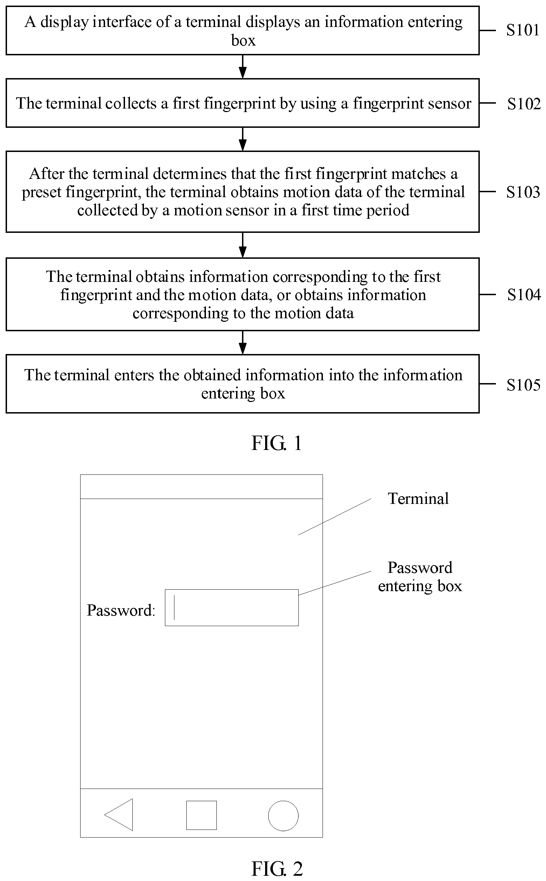

An embodiment of the present invention provides an information entering method for a terminal, and the terminal includes a fingerprint sensor and a motion sensor. As shown in FIG. 1, the method may include the following steps.

S101. A display interface of the terminal displays an information entering box.

When the terminal detects that a user needs to enter information, the display interface of the terminal displays the information entering box such as a password entering box, an address entering box, or another text information entering box, so that the user enters related information. For example, FIG. 2 shows a password entering box displayed on the display interface of the terminal when the user needs to enter a password. When using the terminal or an application program on the terminal, the user may need to enter information. When the user needs to enter the information, the display interface of the terminal displays the information entering box, so as to enter the information into the information entering box.

The display interface may display one or more information entering boxes.

S102. The terminal collects a first fingerprint using the fingerprint sensor.

In this embodiment of the present invention, when the terminal detects that the user needs to enter information, the terminal may collect the first fingerprint using the fingerprint sensor.

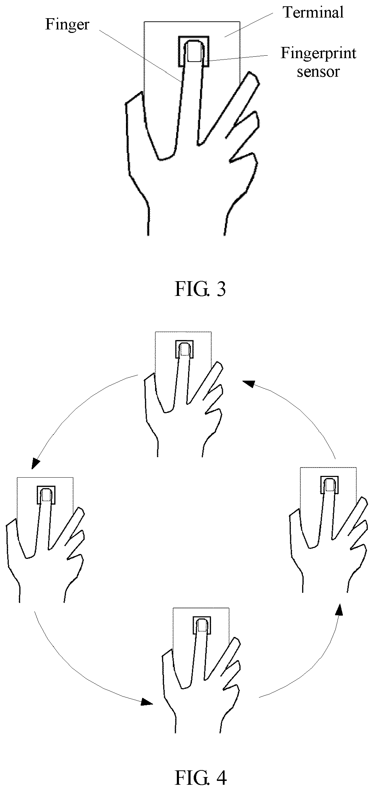

A location of the fingerprint sensor on the terminal is not limited in this embodiment of the present invention. The fingerprint sensor may be located on the front, the side, or the back of the terminal. For example, as shown in FIG. 3, the fingerprint sensor is located on the back of the terminal. When the user puts a finger on the fingerprint sensor, the fingerprint sensor may collect a fingerprint.

S103. After the terminal determines that the first fingerprint matches a preset fingerprint, the terminal obtains motion data of the terminal collected by the motion sensor in a first time period.

In this embodiment of the present invention, after the fingerprint sensor collects the first fingerprint, the terminal may determine whether the first fingerprint matches the preset fingerprint. For example, the terminal may calculate a similarity between a fingerprint feature of the first fingerprint and a fingerprint feature of the preset fingerprint. If the similarity between the fingerprint feature of the first fingerprint and the fingerprint feature of the preset fingerprint is greater than a preset value, the terminal may determine that the first fingerprint matches the preset fingerprint, that is, the first fingerprint collected by the fingerprint sensor is the preset fingerprint.

It should be noted that in this embodiment of the present invention, the terminal may pre-store multiple preset fingerprints. If a similarity between the fingerprint feature of the first fingerprint and a fingerprint feature of one of the multiple preset fingerprints is greater than the preset value, the terminal may determine that the first fingerprint matches the preset fingerprint.

Specifically, for a method for extracting fingerprint features and calculating a similarity between the fingerprint features by the terminal, refer to related descriptions in the prior art. Details are not described herein.

Further, after the terminal determines that the first fingerprint matches the preset fingerprint, the terminal may obtain the motion data of the terminal collected by the motion sensor in the first time period when the user shakes or waves the terminal.

Specifically, in this embodiment of the present invention, after the finger of the user touches the fingerprint sensor of the terminal, the user may maintain a state in which the finger is in touch with the fingerprint sensor, and shake the terminal on the preset track.

For example, as shown in FIG. 4, the preset track is a circle. The user maintains the state in which the finger is in touch with the fingerprint sensor, and shakes the terminal in the air on a circular track.

The first time period may be equal to or less than a time period from a moment at which the fingerprint sensor collects the first fingerprint to a moment at which the terminal detects that the first fingerprint leaves the fingerprint sensor. For example, the moment at which the fingerprint sensor collects the first fingerprint is t1, the moment at which the terminal detects that the first fingerprint leaves the fingerprint sensor is t2, and the first time period may be equal to a time period from the moment t1 to the moment t2, or the first time period may be less than a time period from the moment t1 to the moment t2, that is, the first time period may be any time period within the time period from the moment t1 to the moment t2.

For example, to ensure accuracy of the motion data of the terminal that is obtained by the terminal, the first time period may be a time period from a moment at which the fingerprint sensor starts to collect the first fingerprint to a moment at which the terminal detects that the first fingerprint leaves the fingerprint sensor. Alternatively, the first time period is a time period from a moment at which the terminal determines that the first fingerprint matches the preset fingerprint to a moment at which the terminal detects that the first fingerprint leaves the fingerprint sensor. Alternatively, the first time period is a time period from a moment at which the fingerprint sensor starts to collect the first fingerprint to a moment at which the terminal stops moving. Alternatively, the first time period is a time period from a moment at which the terminal determines that the first fingerprint matches the preset fingerprint to a moment at which the terminal stops moving.

Optionally, the first time period may be a time period from a moment at which the terminal starts to move to a moment at which the terminal stops moving, after the fingerprint sensor starts to collect the first fingerprint. Alternatively, the first time period may be a time period from a moment at which the terminal starts to move to a moment at which the terminal stops moving, after the terminal determines that the first fingerprint matches the preset fingerprint.

It should be noted that after determining to-be-entered information, the terminal may start to monitor the motion data using the motion sensor when the fingerprint sensor detects the first fingerprint, and then capture motion data according to a pre-configured first time period.

Further, in this embodiment of the present invention, the fingerprint sensor continuously detects the first fingerprint in the first time period, that is, in the first time period, the finger of the user constantly keeps in touch with the fingerprint sensor.

It should be noted that in this embodiment of the present invention, the motion sensor may collect the motion data of the terminal in the first time period at a specific frame rate. For example, the frame rate is 60 frames per second (fps), that is, the motion sensor collects the motion data 60 times per second. The motion sensor may always maintain a state of collecting the motion data of the terminal after the terminal is powered on, or may start to collect the motion data of the terminal from the moment at which the terminal starts to collect the first fingerprint, and stop collecting the motion data of the terminal when the first fingerprint leaves the fingerprint sensor. This is not limited in this embodiment of the present invention.

The motion sensor may include but is not limited to any one or more of an acceleration sensor, a gyroscope, a magnetometer, or a gravity sensor.

Correspondingly, the motion data of the terminal may include but is not limited to any one or more of vectors such as a speed, an acceleration, an angular velocity, or an angular acceleration of the terminal.

S104. The terminal obtains information corresponding to the first fingerprint and the motion data, or obtains information corresponding to the motion data.

It should be noted that the terminal pre-stores the information corresponding to the first fingerprint and the motion data, or the information corresponding to the motion data. Therefore, after obtaining the first fingerprint and the motion data, the terminal may obtain the information corresponding to the first fingerprint and the motion data, or obtain the information corresponding to the motion data.

Specifically, in this embodiment of the present invention, after obtaining the motion data in the first time period that is generated when the user shakes the terminal on the preset track, the terminal may first perform a series of operations and processing on the motion data, to calculate a first motion feature vector of the motion data.

For example, the terminal may arrange the motion data of the terminal into a data matrix in a time order, then perform filtering processing on the data matrix, to obtain a change feature of the motion data, and finally simplify the obtained change feature, to obtain the first motion feature vector of the terminal.

For example, it is assumed that the motion data collected by the motion sensor each time includes the speed, the acceleration, the angular velocity, and the angular acceleration of the terminal. In the first time period, the motion sensor collects the motion data of the terminal n times in total. The following shows the data matrix obtained after the terminal arranges the motion data collected by the motion sensor in a time order:

$$\begin{bmatrix} a1 & b1 & c1 & d1 \\ a2 & b2 & c2 & d2 \\ ... & ... & ... & ... \\ an & bn & cn & dn \end{bmatrix},$$

where

a1, a2, ..., and an respectively represent n speeds of the terminal collected by the motion sensor; b1, b2, ..., and bn respectively represent n accelerations of the terminal collected by the motion sensor; c1, c2, ..., and cn respectively represent n angular velocities of the terminal collected by the motion sensor; and d1, d2, ..., and dn respectively represent n angular accelerations of the terminal collected by the motion sensor.

Further, performing the filtering processing on the data matrix may be performing low-pass filtering processing on the data matrix. Simplifying the change feature of the motion data may be deleting a motion feature vector with an unobvious feature and retaining the first motion feature vector with a most obvious motion feature.

After the terminal calculates the first motion feature vector of the terminal, the terminal may calculate a similarity between the first motion feature vector and a preset motion feature vector in the terminal. If the similarity between the first motion feature vector and the preset motion feature vector is greater than a preset threshold, the terminal may determine that the first motion feature vector matches the preset motion feature vector.

Further, after the terminal determines that the first motion feature vector matches the preset motion feature vector, the terminal may obtain, according to a preset data correspondence, the information corresponding to the first fingerprint and the motion data, or obtain the information corresponding to the motion data.

It should be noted that in this embodiment of the present invention, the preset data correspondence may be a correspondence between a preset fingerprint and a preset motion feature vector and information. For example, Table 1 shows a data correspondence stored in the terminal.

**Table 1**

| Preset fingerprint | Preset motion feature vector | Information |
|---|---|---|
| Fingerprint 1 | Motion feature vector 1 | Password 1 |
| Fingerprint 1 | Motion feature vector 2 | Address |
| Fingerprint 2 | Motion feature vector 1 | Password 2 |
| ... | ... | ... |

When the terminal determines that the first fingerprint matches the fingerprint 1, and the first motion feature vector of the motion data of the terminal matches the motion feature vector 1, the terminal may determine, according to a data correspondence that "information corresponding to the fingerprint 1 and the motion feature vector 1 is the password 1" shown in Table 1, that the information corresponding to the first fingerprint and the motion data of the terminal is the password 1.

It may be understood that in this embodiment of the present invention, one piece of information is represented by both a fingerprint and a motion feature vector. A same fingerprint and different motion feature vectors may represent different information, and different fingerprints and a same motion feature may also represent different information. Therefore, more information may be flexibly set in a manner in which one piece of information is represented by both a fingerprint and a motion feature vector.

Alternatively, in this embodiment of the present invention, the preset data correspondence may be a correspondence between a motion feature vector and information. For example, Table 2 shows a data correspondence stored in the terminal.

**Table 2**

| Preset motion feature vector | Information |
|---|---|
| Motion feature vector 1 | Password 1 |
| Motion feature vector 2 | Password 2 |
| ... | ... |

When the terminal determines that the first motion feature vector of the motion data of the terminal matches the motion feature vector 1, the terminal may determine, according to a data correspondence that "information corresponding to the motion feature vector 1 is the password 1" shown in Table 2, that the information corresponding to the motion data of the terminal in the first time period is the password 1.

It may be understood that in this embodiment of the present invention, compared with the manner in which one piece of information is represented by both the fingerprint and the motion feature vector, representing one piece of information by one motion feature vector can reduce system calculation procedures in the terminal.

It should be noted that in a specific implementation process, an order of performing step S101 and steps S102 to S104 is not limited in this embodiment of the present invention. When the terminal learns that information needs to be entered, the terminal may start to perform step S101 and steps S102 to S104. Step S101 may be first performed, and then steps S102 to S104 are performed; or steps S102 to S104 may be first performed, and then step S101 is performed; or step S101 may be performed when steps S102 to S104 are being performed.

S105. The terminal enters the obtained information into the information entering box.

After the terminal obtains the information, if the display interface of the terminal displays the information entering box, the terminal may enter the information into the information entering box.

It should be noted that when one information entering box is displayed, the terminal enters the obtained information into the information entering box in step S105. Alternatively, when one information entering box is displayed, and a cursor is located in the information entering box, the terminal enters the obtained information into the information entering box in step S105.

When multiple information entering boxes are displayed, the terminal enters the obtained information into the information entering box in which the cursor is currently located in step S105. For example, two information entering boxes are displayed: a first information entering box and a second information entering box. The cursor is in the first information entering box, and the terminal enters the obtained information into the first information entering box in step S105.

Further, the terminal may display the information on the information entering box in a plaintext manner or in a ciphertext manner according to a property of the information entering box.

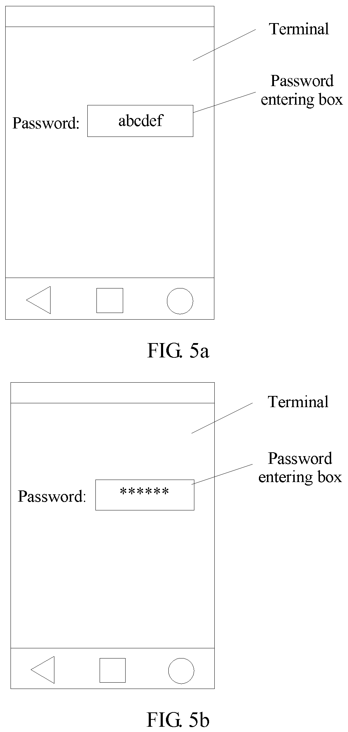

For example, it is assumed that a password obtained by the terminal is abcdef. If the terminal displays the password in the plaintext manner, as shown in FIG. 5a, after the terminal enters the obtained abcdef into the information entering box, the information entering box displays "abcdef".

If the terminal displays the password in the ciphertext manner, as shown in FIG. 5b, after the terminal enters the obtained abcdef into the information entering box, the information entering box displays "******", that is, the terminal does not display the abcdef.

It should be noted that in this embodiment of the present invention, before the terminal performs the information entering method provided in this embodiment of the present invention, the terminal needs to pre-store the preset fingerprint and the preset data correspondence.

For example, the terminal pre-stores the data correspondence shown in Table 1. In a process that the terminal stores the data correspondence shown in Table 1, the user puts the finger on the fingerprint sensor of the terminal, and the fingerprint sensor collects and stores the fingerprint 1. After the terminal prompts the user to confirm that the fingerprint 1 is collected, the user maintains a state in which the finger is in touch with the fingerprint sensor, and shakes the terminal on a specific track, and the motion sensor collects the motion data of the terminal. For example, the user maintains the state in which the finger is in touch with the fingerprint sensor, and shakes the terminal in a shape of circle, or in a shape of "Z" in the air. The terminal obtains the motion data of the terminal that is generated when the user shakes the terminal on the track, and calculates the motion feature vector 1 of the motion data.

Further, after determining that the fingerprint 1 is successfully collected and the motion feature vector 1 is successfully obtained, the terminal receives information that is entered twice by the user. If the information that is entered twice is the password 1, the data correspondence between the fingerprint 1 and the motion feature vector 1 and the password 1 is stored. That is, the user first enters the password 1, and then enters the password 1 again to ensure that the entered information is the password 1.

If the user pre-stores the data correspondence shown in Table 2, after the fingerprint sensor collects and stores the fingerprint 1, and prompts the user to confirm that the fingerprint 1 is collected, the terminal receives information that is entered twice by the user. If the information that is entered twice is the password 1, the data correspondence between the motion feature vector 1 and the password 1 is stored.

It should be noted that, to ensure security of the data correspondence, the terminal may store the data correspondence in a security area of the terminal. If the terminal does not have the security area, the terminal may encrypt the data correspondence according to an encryption algorithm. The encryption algorithm may be an International Data Encryption Algorithm (English: International Data Encryption Algorithm, IDEA for short), an Advanced Encryption Standard (English: Advanced Encryption Standard, AES for short), or the like.

According to the information entering method for a terminal provided in this embodiment of the present invention, the first fingerprint is collected, after the first fingerprint matches the preset fingerprint, the motion data of the terminal in the first time period is collected, to obtain the information corresponding to the first fingerprint and the motion data or the information corresponding to the motion data, and further the information is entered into the information entering box, so that the user enters the information without using a keyboard, and security of entering the information on the terminal is ensured.

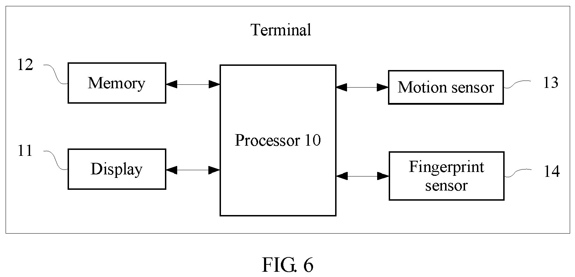

As shown in FIG. 6, FIG. 6 provides a terminal according to an embodiment of the present invention. The terminal may be configured to implement the information entering method shown in FIG. 1. For ease of description, only a part relevant to this embodiment of the present invention is shown. For specific technical details that are not disclosed, refer to the embodiments of the present invention shown in FIG. 1 to FIG. 5.

The terminal may be a terminal device such as a mobile phone, a tablet computer, an ultra-mobile personal computer (English: Ultra-mobile Personal Computer, UMPC for short), or a personal digital assistant (English: Personal Digital Assistant, PDA for short). In this embodiment of the present invention, FIG. 6 shows a block diagram of a partial structure of the terminal related to the embodiments of the present invention.

As shown in FIG. 6, the terminal includes parts such as a processor 10, a display 11, a memory 12, a motion sensor 13, and a fingerprint sensor 14. Persons skilled in the art may understand that a hardware structure of the terminal shown in FIG. 6 does not constitute a limitation on the terminal, and may include parts more or less than those shown in the figure, a combination of some parts, or different part arrangements.

The following describes each compositional part of the terminal in detail with reference to FIG. 6.

The processor 20 may be a central processing unit (English: central processing unit, CPU for short). Alternatively, the processor 20 may be another general purpose processor, a digital signal processor (English: digital signal processing, DSP for short), an application-specific integrated circuit (English: application specific integrated circuit, ASIC for short), a field programmable gate array (English: field-programmable gate array, FPGA for short), or another programmable logic device, a discrete gate or a transistor logic device, a discrete hardware assembly, or the like. The general purpose processor may be a microprocessor or this processor may be any normal processor, or the like. The processor 10 is a data processing and control center of the terminal and is connected to all the parts of the entire terminal using various interfaces and lines, and performs various functions of the terminal and data processing by running or executing a software program and/or a software module that are/is stored in the memory 12 and by invoking data stored in the memory 12, so as to perform overall control on the terminal.

Optionally, the processor 10 may include one or more processing units. Preferably, an application processor and a modem processor may be integrated into the processor 10. The application processor mainly processes an operating system, a user interface, an application program, and the like; and the modem processor mainly processes radio communications. It may be understood that the foregoing modem processor may be not integrated into the processor 10.

The memory 12 may include a volatile memory (English: volatile memory), for example, a random-access memory (English: random-access memory, RAM for short); or the memory 12 may include a non-volatile memory (English: non-volatile memory), for example, a read-only memory (English: read-only memory, ROM for short), a flash memory (English: flash memory), a hard disk (English: hard disk drive, HDD for short), or a solid-state drive (English: solid-state drive, SSD for short); or the memory 21 may include a combination of the foregoing types of memories.

The memory 12 may mainly include a program storage area and a data storage area. The program storage area may store an operating system, and an application program required by at least one function (such as an application program required by a sound playing function or an application program required by an image playing function), and the like. The data storage area may store data (such as password data, image data, a phonebook, and audio data) created according to use of the terminal, and the like.

The display 11 may be configured to display an information entering box, information entered by a user, information provided for a user, and various menus of the terminal. For example, the display 11 may include a touchscreen and a display panel. A form such as a liquid crystal display (English: Liquid Crystal Display, LCD for short) or an organic light-emitting diode (English: Organic Light-Emitting Diode, OLED for short) may be used to configure the display panel. The touchscreen may cover the display panel. After detecting a touch operation on or near the touchscreen, the touchscreen transmits the touch operation to the processor 10 to determine a type of a touch event, and then the processor 10 displays corresponding information on the display panel according to the type of the touch event.

The motion sensor 13 is configured to collect motion data of the terminal.

The fingerprint sensor 14 is configured to collect a fingerprint.

Further, in this embodiment of the present invention, although not shown in the figure, the terminal further includes a power supply (such as a battery) that supplies power to all the parts. Preferably, the power supply may be logically connected to the processor 10 using a power management system, so as to implement functions such as management of charging, discharging, and power consumption using the power management system.

The terminal may further include a Wireless Fidelity (English: wireless fidelity, WiFi for short) module, an audio circuit, a speaker, a microphone, or another sensor such as a light sensor, a barometer, and a hygrometer, and details are not described herein.

In this embodiment of the present invention, the processor 10 is configured to: after determining that the first fingerprint collected by the fingerprint sensor 14 matches a preset fingerprint, obtain motion data of the terminal collected by the motion sensor 13 in a first time period; obtain information corresponding to the first fingerprint and the motion data, or obtain information corresponding to the motion data; and enter the obtained information into the information entering box displayed on the display, where the first time period is equal to a time period from a moment at which the fingerprint sensor collects the first fingerprint to a moment at which the first fingerprint leaves the fingerprint sensor.

Further, the first time period is a time period from a moment at which the fingerprint sensor starts to collect the first fingerprint to a moment at which the terminal detects that the first fingerprint leaves the fingerprint sensor; or the first time period is a time period from a moment at which the terminal determines that the first fingerprint matches the preset fingerprint to a moment at which the terminal detects that the first fingerprint leaves the fingerprint sensor; or the first time period is a time period from a moment at which the fingerprint sensor starts to collect the first fingerprint to a moment at which the terminal stops moving; or the first time period is a time period from a moment at which the terminal determines that the first fingerprint matches the preset fingerprint to a moment at which the terminal stops moving; or the first time period is a time period from a moment at which the terminal starts to move to a moment at which the terminal stops moving, after the fingerprint sensor starts to collect the first fingerprint; or the first time period is a time period from a moment at which the terminal starts to move to a moment at which the terminal stops moving, after the terminal determines that the first fingerprint matches the preset fingerprint.

Further, the fingerprint sensor 14 continuously detects the first fingerprint in the first time period.

Optionally, the display 11 displays one information entering box; or the display 11 displays one information entering box, and the terminal is in a state in which information is to be entered.

Optionally, the display 11 displays a first information entering box and a second information entering box, and the terminal is in a state in which information is to be entered into the first information entering box.

When entering the information into the information entering box, the processor 10 is specifically configured to enter the information into the first information entering box.

Further, when obtaining the information corresponding to the first fingerprint and the motion data, or obtaining the information corresponding to the motion data, the processor 10 is specifically configured to:

calculate a first motion feature vector according to the motion data; and
after determining that the first motion feature vector matches a preset motion feature vector, obtain, according to a preset data correspondence, the information corresponding to the first fingerprint and the motion data, or obtain the information corresponding to the motion data.

Further, the information entering box displayed on the display is a password entering box.

Further, the motion sensor 13 includes at least one or more of the following: an acceleration sensor, a gyroscope, a magnetometer, or a gravity sensor.

Specifically, the acceleration sensor is configured to collect an accelerate speed of the terminal.

The gyroscope may be configured to collect an angular velocity and an angular acceleration of the terminal.

The gravity sensor may detect an acceleration value in each direction (generally, three axes) of the terminal, may detect a value and a direction of gravity in a static mode, and may be used for an application that identifies the terminal gesture (such as screen orientation, a motion track, and magnetometer gesture calibration), a function related to vibration identification (such as a pedometer and a stroke), and the like.

Further, the motion data collected by the motion sensor includes any one or more of the following: a speed, the acceleration, the angular velocity, or the angular acceleration of the terminal.

Further, the processor 10 is specifically configured to enter the obtained information into the information entering box in a ciphertext manner. Alternatively, the processor 10 is specifically configured to enter the obtained information into the information entering box in a plaintext manner.

The terminal provided in this embodiment of the present invention can collect the first fingerprint, after the first fingerprint matches the preset fingerprint, collect the motion data of the terminal in the first time period, to obtain the information corresponding to the first fingerprint and the motion data or the information corresponding to the motion data, and further enter the information into the information entering box displayed on the terminal, so that the user enters the information without using the keyboard, and security of entering the information on the terminal is ensured.

Optionally, the embodiments of the present invention further provide a computer readable storage medium. The computer readable storage medium stores one or more programs, and the one or more programs include an instruction. When at least one processor of a wireless access device executes the instruction, the wireless access device performs the information entering method for a terminal shown in the figure. For a specific information entering method, refer to related description in the embodiments shown in FIG. 1 to FIG. 5, and details are not described herein again.

It may be clearly understood by persons skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, terminal, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of a software functional unit.

When the integrated unit is implemented in the form of a software functional unit and sold or used as an independent product, the integrated unit may be stored in a computer-readable storage medium. Based on such an understanding, all or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The storage medium is a non-transitory (English: non-transitory) medium and includes any medium that can store program code, such as a flash memory, a removable hard disk, a read-only memory, a random access memory, a magnetic disk, or an optical disc.

The foregoing descriptions are merely specific implementations of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. An information entering method for a terminal, wherein the terminal comprises a fingerprint sensor and a motion sensor, and the method comprises:

   displaying, by a display interface of the terminal, an information entering box;
   collecting, by the terminal, a first fingerprint using the fingerprint sensor;
   after the terminal determines that the first fingerprint matches a preset fingerprint, obtaining, by the terminal, motion data of the terminal collected by the motion sensor in a first time period;
   obtaining, by the terminal, information corresponding to the first fingerprint and the motion data, or obtaining information corresponding to the motion data; and
   entering, by the terminal, the obtained information into the information entering box.

2. The method according to claim 1, wherein
   the first time period is a time period from a moment at which the fingerprint sensor starts to collect the first fingerprint to a moment at which the terminal detects that the first fingerprint leaves the fingerprint sensor; or
   the first time period is a time period from a moment at which the terminal determines that the first fingerprint matches the preset fingerprint to a moment at which the terminal detects that the first fingerprint leaves the fingerprint sensor; or
   the first time period is a time period from a moment at which the fingerprint sensor starts to collect the first fingerprint to a moment at which the terminal stops moving; or
   the first time period is a time period from a moment at which the terminal determines that the first fingerprint matches the preset fingerprint to a moment at which the terminal stops moving; or
   the first time period is a time period from a moment at which the terminal starts to move to a moment at which the terminal stops moving, after the fingerprint sensor starts to collect the first fingerprint; or
   the first time period is a time period from a moment at which the terminal starts to move to a moment at which the terminal stops moving, after the terminal determines that the first fingerprint matches the preset fingerprint.

3. The method according to claim 1 or 2, wherein the fingerprint sensor continuously detects the first fingerprint in the first time period.

4. The method according to any one of claims 1 to 3, wherein the displaying, by a display interface of the terminal, an information entering box comprises:

displaying, by the display interface of the terminal, one information entering box; or
displaying, by the display interface of the terminal, one information entering box, wherein the terminal is in a state in which information is to be entered.

5. The method according to any one of claims 1 to 3, wherein
the displaying, by a display interface of the terminal, an information entering box comprises: displaying, by the display interface of the terminal, a first information entering box and a second information entering box, wherein the terminal is in a state in which information is to be entered into the first information entering box; and
the entering, by the terminal, the obtained information into the information entering box comprises: entering, by the terminal, the obtained information into the first information entering box.

6. The method according to any one of claims 1 to 5, wherein the obtaining, by the terminal, information corresponding to the first fingerprint and the motion data, or obtaining information corresponding to the motion data comprises:

calculating, by the terminal, a first motion feature vector according to the motion data; and
after the terminal determines that the first motion feature vector matches a preset motion feature vector, obtaining, by the terminal according to a preset data correspondence, the information corresponding to the first fingerprint and the motion data, or obtaining the information corresponding to the motion data.

7. The method according to any one of claims 1 to 6, wherein the information entering box is a password entering box.

8. The method according to any one of claims 1 to 7, wherein the motion sensor comprises at least one or more of the following: an acceleration sensor, a gyroscope, a magnetometer, or a gravity sensor.

9. The method according to any one of claims 1 to 7, wherein the motion data comprises any one or more of the following: a speed, an acceleration, an angular velocity, or an angular acceleration of the terminal.

10. The method according to any one of claims 1 to 9, wherein
the information is displayed in the information entering box in a plaintext manner or in a ciphertext manner.

11. A terminal, comprising:

a display;
a fingerprint sensor, configured to collect a fingerprint;
a motion sensor, configured to collect motion data of the terminal; and
a processor, configured to: display an information entering box on the display;

after the fingerprint sensor collects a first fingerprint and determines that the first fingerprint matches a preset fingerprint, obtain motion data of the terminal collected by the motion sensor in a first time period; obtain information corresponding to the first fingerprint and the motion data, or obtain information corresponding to the motion data; and enter the obtained information into the information entering box displayed on the display.

12. The terminal according to claim 11, wherein:

the first time period is a time period from a moment at which the fingerprint sensor starts to collect the first fingerprint to a moment at which the terminal detects that the first fingerprint leaves the fingerprint sensor; or
the first time period is a time period from a moment at which the terminal determines that the first fingerprint matches the preset fingerprint to a moment at which the terminal detects that the first fingerprint leaves the fingerprint sensor; or
the first time period is a time period from a moment at which the fingerprint sensor starts to collect the first fingerprint to a moment at which the terminal stops moving; or

the first time period is a time period from a moment at which the terminal determines that the first fingerprint matches the preset fingerprint to a moment at which the terminal stops moving; or

the first time period is a time period from a moment at which the terminal starts to move to a moment at which the terminal stops moving, after the fingerprint sensor starts to collect the first fingerprint; or

the first time period is a time period from a moment at which the terminal starts to move to a moment at which the terminal stops moving, after the terminal determines that the first fingerprint matches the preset fingerprint.

13. The terminal according to claim 11 or 12, wherein the fingerprint sensor continuously detects the first fingerprint in the first time period.

14. The terminal according to any one of claims 11 to 13, wherein that the display displays the information entering box comprises:

displaying, by the display, one information entering box; or

displaying, by the display, one information entering box, wherein the terminal is in a state in which information is to be entered.

15. The terminal according to any one of claims 11 to 13, wherein that the display displays the information entering box comprises: displaying, by the display, a first information entering box and a second information entering box, wherein the terminal is in a state in which information is to be entered into the first information entering box; and

when entering the information into the information entering box, the processor is specifically configured to enter the information into the first information entering box.

16. The terminal according to any one of claims 11 to 15, wherein when obtaining the information corresponding to the first fingerprint and the motion data, or obtaining the information corresponding to the motion data, the processor is specifically configured to:

calculate a first motion feature vector according to the motion data; and

after determining that the first motion feature vector matches a preset motion feature vector, obtain, according to a preset data correspondence, the information corresponding to the first fingerprint and the motion data, or obtain the information corresponding to the motion data.

17. The terminal according to any one of claims 11 to 16, wherein the information entering box displayed on the display is a password entering box.

18. The terminal according to any one of claims 11 to 17, wherein the motion sensor comprises at least one or more of the following: an acceleration sensor, a gyroscope, a magnetometer, or a gravity sensor.

19. The terminal according to any one of claims 11 to 17, wherein the motion data collected by the motion sensor comprises any one or more of the following: a speed, an acceleration, an angular velocity, or an angular acceleration of the terminal.

20. The terminal according to any one of claims 11 to 19, wherein

the information is displayed in the information entering box in a plaintext manner or in a ciphertext manner.

| | |
|---|---|
| A display interface of a terminal displays an information entering box | — S101 |
| The terminal collects a first fingerprint by using a fingerprint sensor | — S102 |
| After the terminal determines that the first fingerprint matches a preset fingerprint, the terminal obtains motion data of the terminal collected by a motion sensor in a first time period | — S103 |
| The terminal obtains information corresponding to the first fingerprint and the motion data, or obtains information corresponding to the motion data | — S104 |
| The terminal enters the obtained information into the information entering box | — S105 |

FIG. 1

Terminal

Password entering box

Password:

FIG. 2

Finger

Terminal

Fingerprint
sensor

FIG. 3

FIG. 4

Terminal

Password
entering box

Password: abcdef

FIG. 5a

Terminal

Password
entering box

Password: ******

FIG. 5b

Terminal

12 — Memory

11 — Display

Processor 10

Motion sensor — 13

Fingerprint sensor — 14

FIG. 6

# INTERNATIONAL SEARCH REPORT

| International application No. |
| --- |
| PCT/CN2016/076307 |

### A. CLASSIFICATION OF SUBJECT MATTER

H04M 1/725 (2006.01) i; G06F 3/033 (2013.01) n

According to International Patent Classification (IPC) or to both national classification and IPC

### B. FIELDS SEARCHED

Minimum documentation searched (classification system followed by classification symbols)

H04M; G06F

Documentation searched other than minimum documentation to the extent that such documents are included in the fields searched

Electronic data base consulted during the international search (name of data base and, where practicable, search terms used)

CNTXT; CNABS; CNKI; WOTXT; EPTXT; USTXT; VEN: handset, terminal, mobile, phone, text, movement, track, move, acceleration, sensor, character, letter, accelerometer, gyroscope, input, action, motion, finger, print?, fingerprint, smart device, wearable device

### C. DOCUMENTS CONSIDERED TO BE RELEVANT

| Category* | Citation of document, with indication, where appropriate, of the relevant passages | Relevant to claim No. |
| --- | --- | --- |
| X | CN 102725712 A (INVENSENSE INC.) 10 October 2012 (10.10.2012) description, paragraphs [0100]-[0125] | 1-20 |
| X | CN 203720787 U (LI, Jianwei) 16 July 2014 (16.07.2014) description, paragraphs [0019]-[0030] | 1-20 |
| X | CN 102111479 A (SIMCOM INFORMATION TECHNOLOGY (SHANGHAI) CO., LTD.) 29 June 2011 (29.06.2011) description, paragraphs [0015]-[0019] | 1-20 |
| X | US 2007176898 A1 (MEMSIC, INC.) 02 August 2007 (02.08.2007) description, paragraphs [0025]-[0054] | 1-20 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 26 November 2016 | 22 December 2016 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>HUANG, Hui<br><br>Telephone No. (86-10) 62089455 |

Form PCT/ISA /210 (second sheet) (July 2009)

## INTERNATIONAL SEARCH REPORT
### Information on patent family members

International application No.

PCT/CN2016/076307

| Patent Documents referred in the Report | Publication Date | Patent Family | Publication Date |
|---|---|---|---|
| CN 102725712 A | 10 October 2012 | CN 102725712 B | 07 September 2016 |
| | | EP 2499552 A4 | 22 July 2015 |
| | | TW 201140386 A | 16 November 2011 |
| | | US 2012007713 A1 | 12 January 2012 |
| | | EP 2499552 A1 | 19 September 2012 |
| | | JP 2013510381 A | 21 March 2013 |
| | | WO 2011057287 A1 | 12 May 2011 |
| | | US 2016018902 A1 | 21 January 2016 |
| | | US 9174123 B2 | 03 November 2015 |
| | | JP 5882220 B2 | 09 March 2016 |
| | | US 9144735 B2 | 29 September 2015 |
| CN 203720787 U | 16 July 2014 | None | |
| CN 102111479 A | 29 June 2011 | None | |
| US 2007176898 A1 | 02 August 2007 | JP 2007207228 A | 16 August 2007 |
| | | JP 2012256378 A | 27 December 2012 |
| | | US 7667686 B2 | 23 February 2010 |

Form PCT/ISA /210 (patent family annex) (July 2009)